# EUROPÄISCHE PATENTSCHRIFT

(11) **EP 1 039 429 B1**
(45) Veröffentlichungstag und Bekanntmachung des Hinweises auf die Patenterteilung: **05.07.2006**
(21) Anmeldenummer: 00105899.9
(22) Anmeldetag: 21.03.2000
(51) Int. Cl.: G08G 1/0969, G01C 21/20

(54) **Verfahren zur portablen Routenführung mit einem On-Board Navigationsgerät sowie portables Navigationssystem**
Procedure for portable route guidance with an on-board navigation equipment as well as portable navigation system
Méthode de guidage portable de route avec un appareil de navigation embarqué ainsi que système de navigation portable

(30) Priorität: 22.03.1999 DE 19912742
(43) Veröffentlichungstag der Anmeldung: 27.09.2000
(73) Patentinhaber: ROBERT BOSCH GMBH, 70442 Stuttgart (DE)
(72) Erfinder: Duckeck, Ralf, 31137 Hildesheim (DE); Tanneberger, Volkmar, 31139 Hildesheim (DE)

(56) Entgegenhaltungen:
- EP-A- 0 810 571
- EP-A- 0 875 878
- DE-A- 19 824 587

## Beschreibung

Die Erfindung betrifft ein Verfahren zur portablen Routenführung mit einem Navigationssystem und einem Mobiltelefon, sowie ein portables Navigationssystem mit einem Navigationsgerät und einem Mobiltelefon sowie ein Mobiltelefon hierzu.

Navigationssysteme werden vor allem in Kraftfahrzeugen zur Unterstützung von Fahrzeugführern bei der Routenplanung und der Navigation eingesetzt. Sie sind als On-Board-, Off-Board- und hybride Navigationssystem hinreichend bekannt. Grundsätzlich arbeiten sie derart, daß ein Benutzer eine Route durch Eingabe von mindestens einer Start- und Zielposition festlegt. Anhand von Straßenkarten-Informationen werden optimale Routen von dem Navigationssystem geplant. Während der Fahrt wird das Navigationssystem mittels entsprechender Positionssensoren, zum Beispiel GPS oder Geschwindigkeits- und Wegsensoren, kontinuierlich mit einer IstPosition abgeglichen und der Fahrzeugführer wird mit Informationen über die zu wählenden Fahrtrichtungen informiert.

Bei On-Board-Navigationssystemen sind die Straßenkarten-Informationen lokal zum Beispiel auf einer CD-ROM gespeichert. Es sind aber auch Off-Board-Navigationssysteme bekannt, die auf einen Straßenkarten-Informationsbestand zugreifen, der in einer Zentrale eines Navigationssystembetreibers verfügbar sind. Das Off-Board-Navigationssystem verfügt über eine Schnittstelle zu einem Mobiltelefon, um mittels Datenfernübertragung bedarfsweise Straßenkarten-Informationen von einer Zentrale zu laden.

Hybride Navigationssysteme kombinieren das Off-Board- und das On-Board-Navigationssystem.

Die vorstehend genannten Navigationssysteme für Kraftfahrzeuge führen sehr genau zu einem Ziel. Wenn das Ziel jedoch in nicht befahrbarem Gelände, zum Beispiel in einer Fußgängerzone liegt, muß der Nutzer den letzten Weg selber finden. Hierzu sind portable Navigationssysteme, sogenannte Personal-Navigatoren, bekannt, die für einen Fußgänger eine ausreichende Orientierungshilfe bieten. Für den Einsatz in Kraftfahrzeugen sind sie jedoch für eine genaue Zielführung zu unpräzise.

Weiterhin ist bekannt, mobile Navigationssysteme mit einer abnehmbaren portablen Einheit auszustatten, in denen Restrouten abgespeichert werden, nachdem das Fahrzeug sein Ziel erreicht hat. Anhand von Richtungsangaben, die auf einem Display der abnehmbaren, portablen Einheit angezeigt werden, wird dem Benutzer eine Orientierungshilfe für den weiteren Weg gegeben. Die abnehmbaren Einheiten haben je nach Ausstattung mehr oder weniger hohe Zusatzkosten und sind teilweise groß, teuer und unhandlich.

Die EP-A 875 878 beschreibt ein Navigationsgerät mit sogenannter Off-Board-Navigation. Hier ist vorgesehen, dass der Benutzer in das mobile Terminal des Navigationsgeräts den Zielpunkt eingibt, das mobile Terminal Informationen bezüglich des Ziel- und Startpunktes an eine zentrale Komponente (Server) sendet, die eine geeignete Route ermittelt und die Routeninformation an das mobile Terminal übermittelt. Zum Zwecke der möglichst geringen Belastung der Telekommunikationsverbindung werden die übertragenen Daten zum mobilen Terminal hin auf das notwendigste beschränkt.

Die DE 198 24 587 A 1 beschreibt ein Navigationsgerät, welches als Mobiltelefon ausgestaltet ist. Wesentlich dabei ist, dass die Navigationssoftware im Mobiltelefon integriert ist. Das Mobiltelefon arbeitet als eigenes Navigationsgerät, in welches die notwendige Software integriert ist.

Es war daher Aufgabe der Erfindung, ein Verfahren zur portablen Routenführung mit einem Navigationsgerät und einem Mobiltelefon sowie ein portables Navigationssystem mit einem Navigationsgerät und einem Mobiltelefon und ein hierzu vorgesehenes Mobiltelefon zu schaffen, mit dem die vorstehend genannten Nachteile weitgehend vermieden und wodurch ein kostengünstiges portables Navigationssystem bereitgestellt wird.

Die Aufgabe wird durch das Verfahren gemäß Patentanspruch 1 gelöst.

Erfindungsgemäß wird somit ein Mobiltelefon als portables Navigationsgerät eingesetzt. Hierzu bedarf es keiner zusätzlichen Komponenten im Mobiltelefon, so daß ein vorhandenes bekanntes On-Board- Navigationsgerät kostengünstig und einfach mit einem ebenfalls verfügbaren Mobiltelefon kombiniert werden kann. Die Berechnung der Route und der Zugriff auf die Straßenkarten-Informationen erfolgt über das Navigationsgerät. Eine Route, Teilroute oder Restroute wird z.B. nachdem das Fahrzeug sein Ziel erreicht hat, auf das Mobiltelefon übertragen, so daß dem Benutzer die weiteren Routeninformationen als Wegweiser auf dem Display des Mobiltelefons angezeigt werden können. Sie können aber auch auf sonstige geeignete Weise, z.B. mittels Sprachausgabe, vom Mobiltelefon ausgegeben werden.

Im Unterschied hierzu beschränkt sich der herkömmliche Einsatz von Mobiltelefonen in Verbindung mit Navigationsgeräten auf die Verwendung als Hilfsmittel zur Übertragung von Straßenkarten-Informationen oder von sonstigen Diensten, wie z.B. Verkehrsinformationen, von einer Zentrale. Mit der Erfindung wird der Funktionsumfang des Mobiltelefons erheblich auf ein portables Navigationsgerät erweitert, ohne daß zusätzliche Komponenten in dem Mobiltelefon erforderlich sind.

Für Mobiltelefone mit einem größeren grafikfähigen Display wird vorgeschlagen, daß Kartenausschnitte der Route bzw. Teilroute auf das Mobiltelefon übertragen und in dem Display angezeigt werden. Hierzu können z.B. Mobiltelefone mit integrierten Personal-Kleinstcomputer und entsprechend großem Display in bekannter Weise programmiert werden.

In einer weiteren vorteilhaften Ausführungsform werden Zusatzinformationen von dem Navigationsgerät auf das Mobiltelefon übertragen. Das Mobiltelefon kann damit als multi-modales Navigationsgerät benutzt werden, indem als Zusatzdaten z.B. Fahrinformationen über Verkehrsmittel auf der übertragenen Route bzw. Teilroute bereitgestellt werden. Der Benutzer kann damit z.B. auf einen Park&Right-Parkplatz geleitet und von dort mit öffentlichen Verkehrsmitteln zu seinem Ziel gebracht werden. Als Fahrinformationen können z.B. Abfahrtszeiten, Fahrtdauer und Fahrtpreise in einer Datenbank des Mobiltelefons abgelegt und über eine Suchroutine ausgewählt werden.

Entsprechend dem Verfahren hat das gattungsgemäße Navigationssystem ein zur Speicherung und Ausgabe von Routeninformationen ausgebildetes Mobiltelefon und das Navigationssystem und das Mobiltelefon haben eine Schnittstelle, um die Route oder eine Teilroute von dem Navigationsgerät auf das Mobiltelefon zu übertragen.

Das Mobiltelefon benötigt hierfür keine zusätzlichen Komponenten, sondern kann durch geeignete Programmierung auf die neuen Funktionen erweitert werden, wobei Speicherplatz bereitgestellt und Displayanzeigen definiert werden müssen.

Die Erfindung ist nachfolgend anhand der beigefügten Zeichnung näher erläutert. Es zeigt:

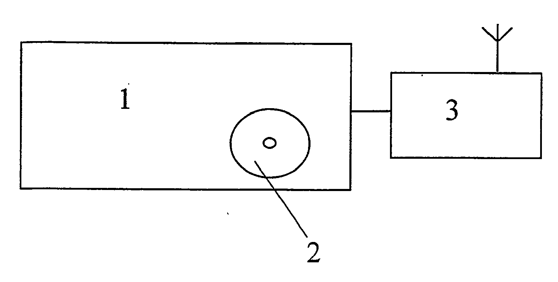

- Figur 1 -: ein Blockdiagramm des portablen Navigationssystems mit einem Navigationsgerät und einem Mobiltelefon.

Zum Berechnen einer Route von einem Startpunkt zu einem Zielpunkt ist ein Navigationsgerät 1 vorgesehen, das als On-Board- Navigationgerät ausgebildet ist. Ein Benutzer gibt in bekannter Weise einen Startpunkt und mindestens einen Zielpunkt in das Navigationsgerät 1 ein. Das Navigationsgerät 1 ermittelt aus Straßenkarten-Informationen eine optimierte Route, die an den Benutzer ausgegeben wird. Die Straßenkarten-Informationen sind bei On-Board-Navigationsgeräten auf einer CD-ROM 2 gespeichert. Das Navigationsgerät 1 ist mit dem Mobiltelefon 3 über eine Schnittstelle verbunden, um eine Route oder eine Teil- bzw. Restroute vom Navigationsgerät auf das Mobiltelefon 3 zu übertragen. Die Restroute wird in dem Mobiltelefon 3 abgespeichert und als Routeninformationen z.B. auf dem Display des Mobiltelefons 3 ausgegeben. Hierbei können z.B. Weginformationen wie "nächste Kreuzung rechts abbiegen" oder Zusatzinformationen über Fahrzeiten, Fahrpreise etc. von öffentlichen Verkehrsmitteln auf dem Display oder durch Sprachausgabe an den Benutzer weitergegeben werden. Die Displayanzeige auf dem Mobiltelefon 3 kann z.B. mit Hilfe der an einem Mobiltelefon 3 verfügbaren Taste auf dem Display weitergeschaltet und gescrollt werden. Die Zusatzinformationen können in einer Datenbank im Speicher des Mobiltelefons 3 abgelegt und mit entsprechenden Suchroutinen ausgewählt werden. Für diese Funktionen wird der in einem Mobiltelefon 3 verfügbare Speicher und Mikroprozessor verwendet und in bekannter Weise programmiert.

## Patentansprüche

1. Verfahren zur portablen Routenführung mit einem On-Board-Navigationsgerät (I) und einem Mobiltelefon (3) mit den Schritten:
- Berechnen einer Route von einem Startpunkt zu einem vom Benutzer in das On-Board-Navigationsgerät (1) eingegebenen Zielpunkt mit Hilfe des On-Board-Navigationsgeräts (1),
- Übertragen der Route oder einer Teilroute von dem On-Board-Navigationsgerät (1) auf das Mobiltelefon (3),
- Ausgeben der Routeninformationen durch das Mobiltelefon (3).

2. Verfahren nach Anspruch 1, **dadurch gekennzeichnet, daß** das Ausgeben der Routeninformationen auf dem Display des Mobiltelefons (3) erfolgt.

3. Verfahren nach Anspruch 2, **dadurch gekennzeichnet, daß** Kartenausschnitte der Route bzw. Teilroute und/oder Textanweisungen auf das Mobiltelefon (3) übertragen werden und die Kartenausschnitte auf dem Display dargestellt werden.

4. Verfahren nach einem der vorhergehenden Ansprüche, **dadurch gekennzeichnet, daß** von dem On-board Navigationsgerät (1) Zusatzinformationen auf das Mobiltelefon (3) übertragen und an dem Mobiltelefon (3) ausgewählt werden können.

5. Verfahren nach Anspruch 4, **dadurch gekennzeichnet, daß** die Zusatzinformationen Informationen auf der übertragenen Route bzw. Teilroute über verfügbare Verkehrsmittel sind.

6. Verfahren nach einem der vorhergehenden Ansprüche, **dadurch gekennzeichnet, daß** die Position des Benutzers mittels eines
Ortungssystems in dem Mobiltelefon (3) bestimmt wird.

7. Portables Navigationssystem mit einem On-Board-Navigationsgerät (1) und einem Mobiltelefon (3), **dadurch gekennzeichnet, dass** das Mobiltelefon (3) zur Speicherung und Ausgabe von Routeninformationen ausgebildet ist und dass das On-Board-Navigationsgerät (1) und das Mobiltelefon (3) jeweils eine Schnittstelle haben, um die im On-Board-Navigationsgerät (1) auf der Basis eines Startpunktes und eines vom Benutzer in das On-Board-Navigationsgerät (1) eingegebenen Zielpunktes berechneten Route oder Teilroute von dem On-Board-Navigationsgerät (1) auf das Mobiltelefon (3) zu übertragen.

8. Portables Navigationssystem nach Anspruch 7, **dadurch gekennzeichnet, daß** die Ausgabe der RoutenInformationen auf dem Display des Mobiltelefons (3) erfolgt.

9. Portables Navigationssystem nach Anspruch 7 oder 8, **dadurch gekennzeichnet, daß** das Mobiltelefon (3) zur Verarbeitung und Angabe von Kartenausschnitten und/oder Textanweisungen der Route bzw. Teilroute ausgebildet ist, die von dem On-board Navigationsgerät (1) auf das Mobiltelefon (3) übertragen werden.

10. Portables Navigationssystem nach einem der Ansprüche 7 bis 9, **dadurch gekennzeichnet, daß** das Mobiltelefon (3) eine Datenbank und eine Suchroutine für die Datenbank hat, wobei Zusatzinformationen über die Route bzw. Teilroute von dem On-board Navigationsgerät (1) auf das Mobiltelefon (3) übertragen und in der Datenbank abgelegt werden.

11. Portables Navigationssystem nach Anspruch 10, **dadurch gekennzeichnet, daß** die Datenbank zur Speicherung von Informationen über Verkehrsmittel auf der übertragenen Route bzw. Teilroute ausgebildet ist.

12. Portables Navigationssystem nach einem der Ansprüche bis, **dadurch gekennzeichnet, daß** das Mobiltelefon (3) eine Ortungseinrichtung zur Feststellung der Position des Benutzers hat.

## Claims

1. Method for portable route guidance with an on-board navigation device (1) and a mobile phone (3) having the steps:
- calculation of a route, using the on-board navigation device (1), from a starting point to a destination which has been input into the on-board navigation device (1) by the user,
- transmission of the route or part of a route from the on-board navigation device (1) to the mobile phone (3),
- outputting of the route information by the mobile phone (3).

2. Method according to Claim 1, **characterized in that** the route information is output on the display of the mobile phone (3).

3. Method according to Claim 2, **characterized in that** excerpts from a map of the route or part of the route and/or text instructions are transmitted to the mobile phone (3) and the excerpts from a map are displayed on the display.

4. Method according to one of the preceding claims, **characterized in that** additional information can be transmitted from the on-board navigation device (1) to the mobile phone (3) and selected at the mobile phone (3).

5. Method according to Claim 4, **characterized in that** the additional information about means of transportation which are available on the transmitted route or part of a route.

6. Method according to one of the preceding claims, **characterized in that** the position of the user is determined by means of a locating system in the mobile phone (3).

7. Portable navigation system having an on-board navigation device (1) and a mobile phone (3), **characterized in that** the mobile phone (3) is designed to store and output route information, and **in that** the on-board navigation device (1) and the mobile phone (3) each have an interface for transmitting the route or part of the route calculated in the on-board navigation device (1) on the basis of a starting point and a destination which has been input into the on-board navigation device (1) by the user from the on-board navigation device (1) to the mobile phone (3).

8. Portable navigation system according to Claim 7, **characterized in that** the route information is output on the display of the mobile phone (3).

9. Portable navigation system according to Claim 7 or 8, **characterized in that** the mobile phone (3) is designed to process and specify excerpts from maps and/or text instructions of the route or part of the route which are transmitted from the on-board navigation device (1) to the mobile phone (3).

10. Portable navigation system according to one of Claims 7 to 9, **characterized in that** the mobile phone (3) has a database and a search routine for the database, additional information about the route or part of the route being transmitted from the on-board navigation device (1) to the mobile phone (3) and stored in the database.

11. Portable navigation system according to Claim 10, **characterized in that** the database is designed to store information about means of transportation on the transmitted route or part of the route.

12. Portable navigation system according to one of Claims to, **characterized in that** the mobile phone (3) has a locating device for determining the position of the user.

## Revendications

1. Procédé de guidage portable d'itinéraire avec un appareil de navigation embarqué (1) et un téléphone mobile (3), comportant les étapes suivantes :
- calculer un itinéraire depuis un point de départ jusqu'à un point de destination introduit par l'utilisateur dans l'appareil de navigation embarqué (1) à l'aide de l'appareil de navigation embarqué (1),
- transmettre l'itinéraire ou un itinéraire partiel de l'appareil de navigation embarqué (1) au téléphone mobile (3), et
- présenter les informations d'itinéraire par le téléphone mobile (3).

2. Procédé selon la revendication 1,
**caractérisé en ce que**
la présentation des informations d'itinéraire est effectuée sur l'affichage du téléphone mobile (3).

3. Procédé selon la revendication 2,
**caractérisé en ce qu'**
on transmet des parties de carte de l'itinéraire ou de l'itinéraire partiel et/ou des informations textuelles au téléphone mobile (3), et les parties de carte sont représentées sur l'affichage.

4. Procédé selon l'une quelconque des revendications précédentes,
**caractérisé en ce que**
l'appareil de navigation embarqué (1) transmet au téléphone mobile (3) des informations supplémentaires qui peuvent être sélectionnées sur le téléphone mobile (3).

5. Procédé selon la revendication 4,
**caractérisé en ce que**
les informations supplémentaires sont des informations concernant des moyens de transport disponibles sur l'itinéraire ou l'itinéraire partiel transmis.

6. Procédé selon l'une quelconque des revendications précédentes,
**caractérisé en ce que**
la position de l'utilisateur est déterminée au moyen d'un système de localisation dans le téléphone mobile (3).

7. Système de navigation portable avec un appareil de navigation embarqué (1) et un téléphone mobile (3),
**caractérisé en ce que**
le téléphone mobile (3) est conçu pour mémoriser et présenter des informations d'itinéraire, et l'appareil de navigation embarqué (1) et le téléphone mobile (3) comportent chacun une interface pour transmettre de l'appareil de navigation embarqué (1) au téléphone mobile (3) l'itinéraire ou l'itinéraire partiel calculé dans l'appareil de navigation embarqué (1) sur la base d'un point de départ et d'un point de destination introduit par l'utilisateur dans l'appareil de navigation embarqué (1).

8. Système de navigation portable selon la revendication 7,
**caractérisé en ce que**
la présentation des informations d'itinéraire est effectuée sur l'affichage du téléphone mobile (3).

9. Système de navigation portable selon la revendication 7 ou 8,
**caractérisé en ce que**
le téléphone mobile (3) est conçu pour le traitement et la présentation de parties de carte et/ou d'informations textuelles de l'itinéraire ou de l'itinéraire partiel, qui sont transmises de l'appareil de navigation embarqué (1) au téléphone mobile (3).

10. Système de navigation portable selon l'une quelconque des revendications 7 à 9,
**caractérisé en ce que**
le téléphone mobile (3) comprend une banque de données et un programme de recherche pour la banque de données, et des informations supplémentaires concernant l'itinéraire ou l'itinéraire partiel sont transmises de l'appareil de navigation embarqué (1) au téléphone mobile (3) et stockées dans la banque de données.

11. Système de navigation portable selon la revendication 10,
**caractérisé en ce que**
la banque de données est conçue pour le stockage d'informations concernant des moyens de transport sur l'itinéraire ou l'itinéraire partiel transmis.

12. Système de navigation portable selon l'une quelconque des revendications 7 à 11,
**caractérisé en ce que**
le téléphone mobile (3) comporte un dispositif de localisation pour déterminer la position de l'utilisateur.
